# EUROPEAN PATENT APPLICATION

(11) **EP 2 942 323 A1**
(43) Date of publication of application: **11.11.2015**
(21) Application number: 14167692.4
(22) Date of filing: 09.05.2014
(51) Int. Cl.: C01B 17/04, B01D 53/00, C01B 17/54, C01B 17/56, C01B 17/76, C01B 17/80, C01B 17/88

(54) **Production of sulfuric acid from coke oven gas desulfurisation product**

(71) Applicant: Haldor Topsøe A/S, 2800 Kgs. Lyngby (DK)
(72) Inventor: Thellefsen, Morten, DK-3400 Hillerød (DK)
(74) Representative: Haldor Topsøe A/S

(57) **Abstract**

The present invention relates to a process and a process plant for the production of sulfuric acid from a gas comprising H₂S and HCN characterized by the following steps; directing said gas to an alkaline absorber containing a liquid ammonia absorbent solution and a material catalytically active in oxidation of H₂S to elemental sulfur providing a liquid slurry comprising sulfur and coke oven gas absorber liquid, separating at least a portion of said elemental sulfur from coke oven gas absorber liquid by mechanical means of separation as a sulfur sludge, combining said sulfur sludge with a support fuel and a first gas comprising oxygen in or upstream an incinerator, incinerating said mixture, providing an incinerated gas comprising SO₂ and NOₓ, optionally adding a second gas comprising oxygen to said incinerated gas, selectively removing the formed NOₓ by chemical reduction with NH₃, contacting said process gas with a material active in oxidation of SO₂ to SO₃ providing an oxidized process gas, optionally adding water to said oxidized process gas and condensing concentrated sulfuric acid formed in said oxidized process gas.

## Description

The invention relates to a process for removal of hydrogen sulfide and hydrogen cyanide from coke oven gas, with associated production of concentrated sulfuric acid.

When coke oven gas is produced from coal, significant amounts of sulfur and nitrogen are also released, mainly in the form of H₂S and HCN. These constituents must be removed from the coke oven gas before the coke oven gas is used as city gas or process gas. One process for cleaning the coke oven gas involves absorbing H₂S and HCN in an alkaline scrubber, and oxidizing H₂S to elemental sulfur by means of a liquid catalyst, which typically is a quinone type compound in combination with a metal such as vanadium cobalt or iron to promote the catalytic activity. The elemental sulfur is then separated from the slurry, and may either be sold as low quality sulfur, or may be transferred to a sulfuric acid production plant, where it is incinerated by the use of a support fuel, forming SO₂, filtered in a high temperature filter and transferred to a catalytic SO₂ to SO₃ conversion unit, and subsequently hydrated to H₂SO₄ and collected as concentrated sulfuric acid. Examples of such configurations may be found in the patents CN101033060 and CN101092577 which involve dry filters and a wet sulfuric acid process, as well as CN101734629 which involve a wet process gas cleaning unit and a dry gas sulfuric acid process. These processes may also release nitrogen oxides, NOₓ, to the environments, since atmospheric nitrogen and reactive nitrogen species are present in the feed to the incinerator, e.g. HCN and in the case where NH₃ is the alkaline absorbent NH₃, and oxidized to NOₓ during incineration at high temperature. The presence of NO₂ may result in the plume having a brown/red color, and the condensation of nitrosyl sulfuric acid (NOHSO₄) may result in increased corrosiveness of the sulfuric acid product.

It has now been realized that if the alkaline scrubber solution is ammonia (NH₃), it may be used in combination with an appropriate catalytically active material for removing NO_{X} by the selective catalytic reduction (SCR) method or the selective non-catalytic reduction (SNCR) method.

For the present application the term catalyst shall be understood as any compound participating reversibly in a reaction. This shall be construed as including a dissolved compound which is reacting in one process position and being regenerated in a different process position, as well solid materials catalyzing the reaction with little or no regeneration required.

In a broad form the present invention relates to a process for the production of sulfuric acid from a gas comprising H₂S and HCN. Said process comprising the following steps:
a. directing said gas to an alkaline absorber containing a liquid ammonia absorbent solution and a material catalytically active in oxidation of H₂S to elemental sulfur providing a liquid slurry comprising elemental sulfur and coke oven gas absorber liquid,
b. separating at least a portion of said elemental sulfur from coke oven gas absorber liquid by mechanical means of separation as a sulfur sludge,
c. combining said sulfur sludge with an support fuel and a first oxidant gas in or upstream an incinerator,
d. incinerating said mixture, providing an incinerated gas comprising SO₂ and NOₓ,
e. removing inorganic dust in a filter unit,
f. combining said incinerated gas with a stream comprising a NOₓ selective reductant taken from the group comprising ammonia, urea and precursors thereof, providing a process gas for selective reduction,
g. reacting said process gas for selective reduction under selective NOₓ reduction conditions, providing a process gas having a reduced concentration of NOₓ,
h. contacting said process gas with a material catalytically active in oxidation of SO₂ to SO₃ providing an oxidized process gas, and
i. withdrawing concentrated sulfuric acid by cooling and condensation providing concentrated sulfuric and a sulfur reduced process gas,
with the associated benefit of avoiding an emission of SO₂ and NOₓ and thus reducing the environmental impact of the process. In addition a fraction of the NOₓ in the oxidized process gas will end up in the product acid as nitrosyl sulfuric acid, thus reducing the quality of the acid and significantly increasing the corrosion rate of carbon steel which is the most common construction material for piping, and holding and transport vessels. Furthermore the acid may be discolored by iron corrosion products.

In a further embodiment the process further comprises the step of contacting said process gas for selective reduction with a material catalytically active in selective reduction of NOₓ, and in which said selective NOₓ reduction conditions involves a temperature between 350 and 550 °C and a pressure of 0.8-1.2 bar, with the associated benefit of this process of selective catalytic reduction of NOₓ being more efficient and less demanding in terms of process conditions compared to selective non-catalytic reduction of NOₓ, i.e. in the absence of a catalyst.

In a further embodiment the material catalytically active in selective reduction of NOₓ comprises a carrier, such as titanium oxide, and active catalytic components taken from the group consisting of oxides of base metals such as vanadium, molybdenum and tungsten, zeolites, and precious metals, with the associated benefit of said compositions being cost effective and well proven in selective catalytic reduction of NOₓ.

In a further embodiment the H₂O/SO₂ ratio in the oxidized process gas is below 1.1, and wherein the oxidized process gas is directed to a condenser for cooling and withdrawal of condensed concentrated sulfuric acid, said process optionally also including the step of addition of water in any position upstream said condenser, with the associated benefit of providing the required amount of water for hydratization of SO₃ to H₂SO₄ and complete condensation of the sulfuric acid.

In a further embodiment the process gas comprises less than 60 ppm water, and wherein the oxidized process gas is directed to an absorber for absorption of SO₃ in concentrated sulfuric acid and for withdrawal of concentrated sulfuric acid, said process also includes the step of removal of water in any position upstream said material catalytically active in oxidation of SO₂ to SO₃, with the associated benefit of providing the correct conditions for acid mist free SO₃ absorption into concentrated sulfuric acid in the absorber and significantly reducing the sulfuric acid dew point temperature in the process gas.

In a further embodiment said material catalytically active in oxidation of H₂S to elemental sulfur is taken from the group comprising picric acid, thioarsenate or quinones, such as a benzoquinone, naphthoquinone or anthraquinone compound optionally with one or more further constituents in ionic form such as sodium, iron, vanadium or cobalt with the associated benefit of catalysts having quinone structure or a similar structure being well known, tested, active, low cost, and known to generate only gaseous combustion products, such as CO₂, H₂O and possibly N₂, NOₓ, SO₂ if substituted with sulfur or nitrogen groups.

In a further embodiment the process further comprises the step of withdrawing a purge stream of said coke oven gas absorber liquid with the associated benefit of avoiding a buildup of sulfur containing ions such as S₂O₃²⁻, SCN⁻ and SO₄²⁻ in the coke oven gas absorber liquid.

In a further embodiment at least a part of said purge stream is directed to the incinerator for conversion of sulfur containing anions to SO₂ and SO₃ with the associated benefit of the purge stream being converted to commercial sulfuric acid product instead of having to send the purge stream to a waste water treatment plant.

In a further embodiment said material active in oxidation of SO₂ to SO₃ comprises vanadium with the associated benefit of being a highly effective and robust SO₂ oxidation catalyst.

In a further embodiment one or both of said first and said second gas comprising oxygen is atmospheric air being preheated by heat exchange with a hot process stream such as the oxidized process gas with the associated benefit of contributing to an efficient thermal management of the process.

In a further embodiment the process further comprises the step of cooling said incinerated gas to a temperature in the range of 300 to 450°C, preferably 380 to 420°C with the associated benefit of both the catalyst for selective NOₓ removal and the catalyst for SO₂ oxidation being highly active at this temperature, while avoiding shifting the SO₂+0.5 O₂ <-> SO₃ equilibrium towards SO₂.

A further aspect of the present invention relates to a process plant comprising an alkaline absorber configured for contacting a gas comprising H₂S with a liquid ammonia absorbent solution and a material catalytically active in oxidation of H₂S to elemental sulfur providing a liquid slurry comprising elemental sulfur and coke oven gas absorber liquid,
a means for mechanical separation configured for separating at least a portion of said elemental sulfur from coke oven gas absorber liquid by mechanical means of separation as a sulfur sludge,
an incinerator configured for incinerating said sulfur sludge together with a support fuel and a first gas comprising oxygen, providing a process gas, a means of cooling such as a waste heat boiler for reducing the process gas temperature,
a particulate removal device for separating solid particles from the process gas,
a means for addition of a selective NOₓ reductant,
a sulfur dioxide converter comprising a material active in oxidation of SO₂ to SO₃ and configured for receiving said process gas and providing an oxidized process gas, and
a means for provision of concentrated sulfuric acid configured for receiving said oxidized process gas and for providing a concentrated sulfuric acid and a desulfurized process gas, with the associated benefit of said process plant being simple and inexpensive.

In a further embodiment said means for withdrawal for sulfuric acid is a condenser configured for receiving said oxidized process gas and a cooling medium and configured for cooling and condensing a concentrated sulfuric acid, a desulfurized process gas and a heated cooling medium, and which process plant optionally comprises a means for addition of water upstream said condenser, with the associated benefit of such a process plant being efficient in providing a highly concentrated sulfuric acid.

In a further embodiment said means for withdrawal for sulfuric acid is an absorber configured for receiving said oxidized process gas and a concentrated sulfuric acid and for absorbing SO₃ in said sulfuric acid providing a concentrated sulfuric acid and a desulfurized process gas, with the associated benefit of such a process plant being efficient in providing a highly concentrated sulfuric acid.

In a further embodiment the process plant further comprises a reactor downstream the addition of selective reductant said reactor configured for the process gas to contact a material catalytically active in selective reduction of NOₓ, with the associated benefit of the conversion of NOₓ to N₂ being more efficient and less demanding in terms of process conditions. Coke oven gas (COG) from the gasification of coal goes through several cleaning steps before it can leave the gasification plant and be used for e.g. chemical synthesis, combustion and heating purposes.

In the desulfurization unit H₂S and HCN are efficiently absorbed into an alkaline absorbent liquid in which a fraction of H₂S is oxidized to elemental sulfur by means of a liquid catalyst. The catalyst is regenerated by air addition which optionally may be carried out in a separate process step. As side reactions some of the H₂S will be further oxidized to a wide range of sulfur-oxides, including S₂O₃²⁻ and SO₄²⁻ and HCN is converted into SCN⁻. With NH₃ as the alkaline component, a wide range of water soluble salts, including (NH₄)₂S₂O₃, (NH₄)₂SO₄ and NH₄SCN may be formed in the liquid phase accounting for up to half of sulfur in the H₂S removed. The sulfur and dissolved NH₄⁺ salts are fed to a unit where the sulfur is separated from the NH₄⁺ salts. Most of the salt solution is returned to the desulfurization unit, but a purge stream is withdrawn to control the concentration of dissolved salts.

This COG desulfurization process is cheap and effective but the products are of poor quality and could be expensive to get rid of in an environmentally benign way. The process variants are numerous and known by trade names such as HPF, PDS, Perox, LoCat, Takahax, Thylox, Fumaks-Rhodacs, and Stretford. The differences are primarily within the catalyst system and alkaline compound.

In the prior art a wide range of organic catalysts for the oxidation of H₂S to elemental sulfur are known, typically having a quinone structure such as a benzoquinone, naphthoquinone or anthraquinone compound optionally with one or more non-metallic substituents, or the structurally similar picric acid or thioarsenate. Typically these quinone type catalysts are supplied to the process in the form of sodium salts or together with ions of metals such as iron, vanadium or cobalt.

The present disclosure involves a method to convert the poor quality sulfur and purged coke oven gas absorber liquid into a commercial quality concentrated sulfuric acid by incineration followed by treatment in a sulfuric acid plant. All of the H₂S captured in the desulfurization unit is converted to sulfuric acid, not only the elemental sulfur formed in the coke oven gas desulfurization plant.

According to present disclosure the sulfur and purged coke oven gas absorber liquid is fed to an incinerator together with a support fuel which may be coke oven gas, whereby the elemental sulfur is oxidized to SO₂ and the sulfur containing NH₄⁺ salts are decomposed into SO₂, CO₂, N₂ and NOₓ. The oxygen required for the combustion may be in the form atmospheric air, pure oxygen or any other gas rich in oxygen. This combustion air may beneficially be preheated, e.g. by using heated cooling air from the sulfuric acid condenser, since this will reduce the amount of support fuel required.

To reduce ash formation in the incinerator the coke oven gas desulfurization process may be NH₃ based and the liquid catalyst may be of organic origin with only low concentration of metals, such that only low concentrations of dust is present in the gas after incineration. This will simplify the process operation of the sulfuric acid plant. If e.g. NaOH is used as the alkaline compound in the coke oven gas absorber liquid, substantial amounts of dust will be formed, with the associated risk of plugging waste heat boiler tubes and increasing the efficiency requirements for the filtration device.

After the incineration step the process gas may be cooled to 380 - 420 °C in a waste heat boiler, producing saturated steam.

The process gas then passes through a filtration device, which removes practically all dust from the process gas. If not removed, the dust will eventually plug the catalyst beds in the downstream SO₂ reactor. The filtration device could e.g. be an electrostatic precipitator or candle filters.

The NOₓ formed by incineration is reduced in a process for selective reduction of NOₓ by NH₃, which either may be a gas phase reaction with moderate efficiency and requiring narrow process conditions (selective non-catalytic reduction (SNCR)), or by contacting the process gas with a catalyst comprising a carrier, such as titanium oxide, and active catalytic components which usually are either oxides of base metals (such as vanadium, molybdenum and tungsten), zeolites, or various precious metals (selective catalytic reduction (SCR)). The NH₃ needed for the reaction may be obtained from a washing process step where NH₃ is removed from the coke oven gas. Anhydrous ammonia, ammonia water (NH₄OH) and urea ((NH₂)₂CO) are also frequently used as the source of NH₃ for the SCR reaction.

Downstream the SCR process, the process gas enters the SO₂ reactor where SO₂ is oxidized by an appropriate catalyst, such as a vanadium-based SO₂ conversion catalyst supported on silica.

The SO₂ oxidation may take place in two or three catalytic beds with inter bed cooling; the exact layout depends on the SO₂ concentration in the process gas and the required SO₂ conversion. After the last bed of SO₂ conversion catalyst the gas is cooled in the process gas cooler, producing saturated steam.

One or more dust guard catalyst layers can be installed above the first catalyst layer in the SO₂ reactor, as it is described in EP 1 114 669. Such guard layers will prolong the up-time of the sulfuric acid plant in the case that small amounts of inorganic ash are present in the process gas.

The interbed coolers superheat the steam produced in the waste heat boiler and process gas cooler and the valuable superheated steam can be exported to other processes.

The process gas finally enters a sulfuric acid condenser where the sulfuric acid is condensed by cooling with air and separated from the cleaned process gas. The hot cooling air from the sulfuric acid condenser may be used as an oxygen source in the incinerator, thus increasing the heat recovery and minimizing support fuel consumption.

### Figures

Figure 1 shows a flow sheet of a process plant according to the prior art, and
Figure 2 shows a flow sheet of a process plant according to a preferred embodiment of the present disclosure.

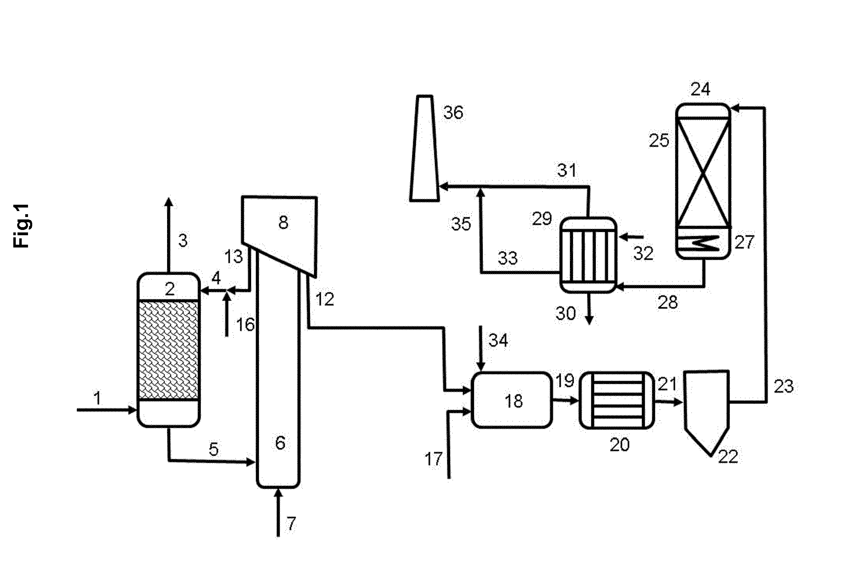

In a process according to the prior art, as illustrated in Figure 1, a coke oven gas 1 is directed to an alkaline absorber 2 fed with an alkaline solution with dissolved catalyst 4. On the gas side a desulfurized coke oven gas 3 is released from the absorber, and on the liquid side a coke oven gas absorber liquid 5 comprising elemental sulfur and dissolved ions comprising sulfur is withdrawn. In a reactor 6 the coke oven gas absorber liquid continues the sulfur forming reaction and the catalyst is reoxidized by means of air addition 7. The formed slurry is skimmed from the coke oven gas absorber liquid in a mechanical separator 8 into a sulfur sludge 12 and coke oven gas absorber liquid 13. The sulfur sludge including the elemental sulfur and part of the coke oven gas absorber liquid 12 is directed to an incinerator 18 with a support fuel 17, such as coke oven gas, and (hot) combustion air 34. The coke oven gas absorber liquid 13 is directed back to the alkaline absorber possibly after being replenished with catalyst and alkaline solution 16. If the implicit purge of coke oven gas absorber liquid through line 12 is insufficient, an extra purge line 13 is required to maintain an acceptable low concentration of dissolved sulfur containing ions (e.g. S₂O₃²⁻, SO₄²⁻, SCN⁻⁾ in the coke oven gas absorber liquid.

The incinerated sulfur sludge and coke oven gas absorber liquid forms a process gas 19, which is cooled in a waste heat boiler 20, and directed to a hot filtration device 22, that efficiently removes the dust formed from the inorganics present in the feed to the incinerator, e.g. inorganic catalyst compounds, dissolved ions from the process water, corrosion products and compounds absorbed from the coke oven gas.

The dust free process gas 23 enters the SO₂ oxidation reactor, 24, in this case comprising a single catalytic bed (25) and an outlet heat exchanger 27. The SO₃ in the oxidized process gas 28 reacts immediately with water present in the oxidized process gas (or optionally added to the oxidized process gas) to form H₂SO₄ which is condensed as concentrated sulfuric acid 30 in a condenser 29, cooled with air 32. A fraction of the heated air 33 from the condenser 29 may be used as combustion air 34 in incinerator 18. The remaining hot air can be combined with the process gas 31 released from the condenser which will have a very low sulfur concentration, and may be released to the atmosphere in a stack 36.

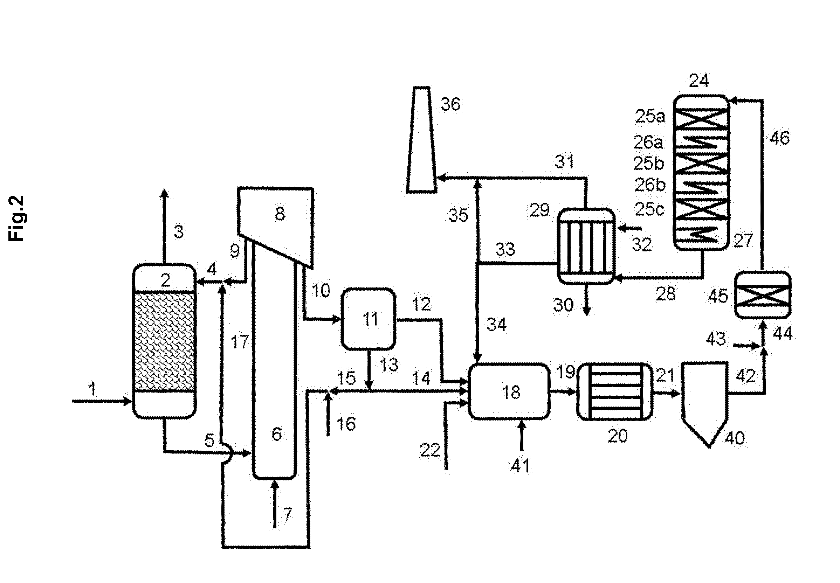

Figure 2 shows a flow sheet of a process plant according to a preferred embodiment of the present disclosure.

A coke oven gas 1 is directed to an alkaline absorber 2 fed with an alkaline solution comprising a catalyst 4. On the gas side a desulfurized coke oven gas 3 is released from the absorber, and on the liquid side coke oven gas absorber liquid 5 comprising elemental sulfur and dissolved ions comprising sulfur is withdrawn. In a reactor 6 the coke oven gas absorber liquid reacts to form elemental sulfur and sulfur containing ions in form of a slurry which is skimmed from the coke oven gas absorber liquid in a mechanical separator 8. The slurry may be separated further in 11 into a concentrated sulfur sludge 12 and coke oven gas absorber liquid 13. A purge stream 14 may be separated from the coke oven gas absorber liquid and directed to an incinerator with the sulfur sludge 12, support fuel 22, such as coke oven gas, and hot combustion air 34. The remaining coke oven gas absorber liquid 15 may be replenished with catalyst and alkaline solution 16 and redirected to the alkaline absorber 17.

The incinerated sulfur sludge and coke oven gas absorber liquid forms a process gas 19, which is cooled in a waste heat boiler 20. After the waste heat boiler the process gas 21 passes through a filter device 40 in which the inorganic and possibly organic dust, formed in the incineration process, is separated from the process gas and withdrawn. The cleaned process gas 42 is mixed with a stream containing ammonia 43 and directed to a selective catalytic reduction reactor 45, in which NOₓ formed during incineration is selectively reduced to N₂ in the presence of a material catalytically active in selective reduction of NOₓ, providing a process gas having a reduced concentration of NOₓ. Downstream the selective catalytic reactor the process gas having a reduced concentration of NOₓ 46 is directed to a SO₂ oxidation reactor in this case comprising three catalytic beds (25a, 25b, 25c) and two inter-bed heat exchangers (26a and 26b) and an outlet heat exchanger 27. The SO₃ in the oxidized gas 28 reacts immediately with water to form H₂SO₄ which is condensed as concentrated sulfuric acid 30 in a condenser 29, cooled with air 32. The heated air 33 from the condenser 29 may be directed as combustion air 34 for the incinerator 18. The process gas 31 released from the condenser will have a very low sulfur dioxide concentration, and may be released to the atmosphere in a stack 36, possibly after dilution with heated air 35.

In one embodiment of the present disclosure the process does not employ cooling and condensation, but instead an absorber in which SO₃ is absorbed in sulfuric acid. Typically this is related to configurations in which the process gas is dried, often downstream the SCR reactor, since water is produced during incineration and selective reduction of NOₓ.

In another embodiment of the present disclosure the selective reduction of NOₓ is carried out in the gas phase. To ensure optimal reaction, this requires that the temperature is in a limited range and the residence time is sufficiently high. In this embodiment, the NH₃ containing reactant for the SNCR reaction can be fed in the moderate temperature section of the incinerator via line 41.

### Examples

An example of a coke oven gas composition entering the desulfurization plant and the removal efficiencies of the desulfurization plant is shown in Table 1.

**Table 1: Typical coke oven gas composition and removal efficiencies in the coke oven gas desulfurization plant.**

| | | |
|---|---|---|
| H₂ concentration | vol% | 50 |
| CH₄ concentration | vol% | 30 |
| CO concentration | vol% | 5 |
| N₂ concentration | vol% | balance |
| HCN concentration | g/Nm³ | 3 |
| H₂S concentration | g/Nm³ | 8 |
| H₂S removal efficiency | % | 99 |
| HCN removal efficiency | % | 90 |

### Example 1

In an example according to the present disclosure a process, as shown in Fig.2 involving an aqueous ammonia absorbent solution and quinone type H₂S oxidation catalyst is used. The key parameters for treatment of a typical coke oven gas (given in Table 1) in a wet sulfuric acid process are shown in table 2. The overall process includes coke oven gas desulfurization, incineration of sulfur sludge and coke oven gas absorber liquid and sulfuric acid production in a wet type sulfuric acid plant.

A coke oven gas is cooled to approximately 30°C and contacts a liquid ammonia absorbent solution, which also contains a dissolved quinone based catalyst. The alkaline absorber according to the example operates at approximately atmospheric pressure. In the reactor operating at about 30°C approximately 50% of the H₂S is converted into elemental sulfur forming a liquid slurry. The remaining H₂S is further oxidized to a large number of sulfur and oxygen containing ions, for simplicity considered as being NH₄SCN and (NH₄)₂S₂O₃. Deviations in the actual composition of NH₄-salts will only slightly influence the composition of the process gas after incineration. The liquid slurry is separated into a sulfur sludge and coke oven gas absorber liquid. A bleed of the coke oven gas absorber liquid is combined with the sulfur sludge, and directed to the incinerator, while the major part of the coke oven gas absorber liquid is recycled to the absorber after being replenished with catalyst and ammonia solution.

In the incinerator all S-atoms are oxidized to SO₂. The NH₄⁺-ion is primarily decomposed to N₂ and H₂O, but a small fraction will be oxidized to NO. In table 2 it is assumed that 5 % of the nitrogen in the feed (SCN⁻ and NH₄⁺) is converted into NO, forming 1800 ppm NOₓ. The exact percentage will depend on the design and operation of the incinerator.

To maintain a combustion temperature around 1100°C in the incinerator, around 0.5 % of the coke oven gas is used for support fuel - the coke oven gas can be withdrawn upstream the desulfurization plant.

The process gas is cooled to about 400°C in an ordinary waste heat boiler, producing saturated high pressure steam.

Dust (in low concentration) is removed in a filtration device operating at 380-420 °C, such as an electrostatic precipitator or candle filters.

The NO formed by NH₄⁺ decomposition in the incinerator is removed by reaction with NH₃ over a SCR catalyst before the process gas enters the wet type sulfuric acid plant. A wide range of SCR catalysts are known to the person skilled in the art typically comprising a carrier, such as titanium oxide, and active catalytic components taken from the group consisting of oxides of base metals such as vanadium, molybdenum and tungsten, zeolites, and precious metals. This removal of NOₓ may be omitted, with no effect on sulfur removal, but naturally this would result in an undesired emission of NOₓ. Especially NO₂ emissions can be problematic as high concentrations in the gas will result in a reddish/brown coloration of the plume. Also a small fraction of the NOₓ will end up in the concentrated acid product as nitrosyl sulfuric acid (NOHSO₄), reducing the quality of the acid. This dissolved NOₓ will also increase the corrosion rate of carbon steel - the most common construction material for storage and transportation vessels.

NH₃ is added in order to reduce the NOₓ concentration by 95 %, reducing the unconverted NOₓ concentration from 4,100 mg/Nm³ to 205 mg/Nm³ (calculated as NO₂). In this example the stack plume will be clear, whereas the plume will be reddish brown without the SCR reactor. Less than roughly 1% of the N in the feed is allowed to form NOₓ in the incinerator for the stack plume to be invisible without having a SCR reactor in operation, the actual percentage depends primarily on the temperature of the last catalyst bed for SO₂ oxidation and the diameter of the stack. In the given example the NO₂ concentration limit for the stack plume to remain colorless is estimated to be 280 mg NO₂/Nm³.

In the wet type sulfuric acid plant, SO₂ is oxidized in three catalyst beds, separated with inter bed coolers to provide an optimum between SO₂ oxidation reaction rates and SO₂ to SO₃ equilibrium. The temperature at the inlet of all of the three beds is approximately 400°C. An overall SO₂ conversion of 99.67% is achieved, resulting in a SO₂ concentration of 400 mg/Nm³ in the cleaned process gas. If one or two beds were used, the overall conversion would be slightly lower.

In the sulfuric acid condenser, the process gas is cooled in glass tubes by heat exchange with air flowing on the shell side. Concentrated sulfuric acid is withdrawn from the bottom of the condenser.

A fraction of the hot air (200-240°C) from the sulfuric acid condenser is used as combustion air, thus increasing the heat efficiency of the process and saving support fuel. By using unheated atmospheric air, the required amount of support fuel would be increased.

The heat withdrawn by cooling the process gas in waste heat boiler, inter bed coolers and process gas cooler is converted into valuable high pressure superheated steam.

**Table 2: Key process parameters for a 100,000 Nm³/h coke oven gas desulfurization plant and sulfuric acid production from the effluent of the desulfurisation plant.**

| Effluent from 100,000 Nm³/h COG desulfurization plant | | |
|---|---|---|
| Elemental sulfur flow | kg/h | 373 |
| NH₄SCN flow | kg/h | 760 |
| (NH₄) ₂S₂O₃ flow | kg/h | 122 |
| Water in coke oven gas absorber liquid | kg/h | 2, 650 |
| Total effluent flow | kg/h | 3, 900 |

| Incinerator | | |
|---|---|---|
| Temperature | °C | 1,100 |
| Combustion air flow | Nm³/h | 9,850 |
| COG support fuel | Nm³/h | 400 |
| Process gas flow | Nm³/h | 13,700 |
| O₂ concentration | vol% | 4.9 |
| SO₂ concentration | vol% | 3.8 |
| NOₓ concentration | vol% | 0.18 |
| H₂O concentration | vol% | 31 |
| NH₃ addition for SCR-deNOX | kg/h | 17 |

| Wet type sulfuric acid plant | | |
|---|---|---|
| SO₂ conversion | % | 99.67 |
| SO₂ in clean gas | mg/Nm³ | 400 |
| H₂SO₄ production (94%w/w) | kg/h | 2,400 |
| | | |
| NOₓ conversion in SCR | % | 95 |
| NOₓ emission (calc. as NO₂) | mg/Nm³ | 205 |

### Example 2

A process operating under conditions similar to Example 1, but with another denitrification system, is covered in example 2.

The process gas leaving the incinerator is similar to the process gas in Example 1, except that now 1.5% formation of NOₓ from the content of N in the feed (SCN⁻ and NH₄⁺-salts) is assumed.

The uncontrolled NOₓ concentration will be 540 ppm by volume, which corresponds to 1,230 mg/Nm³ (calculated as NO₂). Since the SO₂ oxidation catalyst also oxidizes a fraction of the colorless NO to the reddish NO₂, the process gas leaving the stack will be strongly colored.

If the NO₂ concentration can be lower than around 280 mg NO₂/Nm³, i.e. NOₓ formation in the incineration process is kept lower than about 1% of the N in the feed, the stack plume may be colorless without the need for a denitrification process, but the NOₓ concentration may still be above the local emission limits.

The temperature in the incinerator and combustion chamber is in the range where the so-called SNCR reaction (Selective Non Catalytic Reduction) can take place. This reaction is the non-catalytic equivalent to the SCR reaction, in which NOₓ is reduced by addition of an NH₃ source, typically NH₃ or urea. The chemical reactions are kinetically limited to a minimum temperature of ∼ 875 °C, above ∼1,200 °C NH₃ decomposes instead of reacting with NOₓ. In the technical literature, NOₓ conversion efficiencies between 20 and 50 % have been reported in industrial applications. The low conversion efficiencies are due to poor mixing of NH₃ with process gas, short residence time in the active temperature range and a desire for low concentration of unreacted NH₃. The latter is not problematic for a sulfuric acid plant, since the NH₃ will be destroyed on the SO₂ oxidation catalyst. NH₃ for the SNCR reaction could be taken from the same NH₃ solution for the coke oven gas absorber liquid in the coke oven gas desulfurization plant.

In Table 3, 45% NOₓ conversion is assumed, reducing the NOₓ emission in the stack to 300 ppm, which is adequately low to achieve a colorless plume in the stack. Local emission limits may require lower NOₓ emissions.

To achieve a colorless stack plume, the SNCR process will only be relevant to consider if the NOₓ formation in the incinerator can be kept below ∼600 ppm, corresponding to ∼1.6 % of the N in the feed.

**Table 3: Key process parameters for a 100,000 Nm³/h coke oven gas desulfurization plant and sulfuric acid production from the effluent of the desulfurization plant.**

| Effluent from 100,000 Nm³/h COG desulfurization plant | | |
|---|---|---|
| Elemental sulfur flow | kg/h | 373 |
| NH₄SCN flow | kg/h | 760 |
| (NH₄) ₂S₂O₃ flow | kg/h | 122 |
| Water in coke oven gas absorber liquid | kg/h | 2, 650 |
| Total effluent flow | kg/h | 3, 900 |

| Incinerator | | |
|---|---|---|
| Temperature | °C | 1,100 |
| Combustion air flow | Nm³/h | 9,850 |
| COG support fuel | Nm³/h | 400 |
| Process gas flow | Nm³/h | 13,700 |
| O₂ concentration | vol% | 4.9 |
| SO₂ concentration | vol% | 3.8 |
| NOₓ concentration | vol% | 0.0540 |
| H₂O concentration | vol% | 31 |
| NH₃ addition for SNCR-deNOX | kg/h | 2 |

| Wet type sulfuric acid plant | | |
|---|---|---|
| SO₂ conversion | % | 99.67 |
| SO₂ in clean gas | mg/Nm³ | 400 |
| H₂SO₄ production (94%w/w) | kg/h | 2,400 |
| | | |
| NOₓ conversion in SNCR | % | 45 |
| NOₓ emission (calc. as NO₂) | mg/Nm³ | 685 |

## Claims

1. A process for the production of sulfuric acid from a gas comprising H₂S, said method comprising the following steps:
a. directing said gas to an alkaline absorber containing a liquid ammonia absorbent solution and a material catalytically active in oxidation of H₂S to elemental sulfur providing a liquid slurry comprising elemental sulfur and coke oven gas absorber liquid,
b. separating at least a portion of said elemental sulfur from coke oven gas absorber liquid by mechanical means of separation as a sulfur sludge,
c. combining said sulfur sludge with an support fuel and a first oxidant gas in or upstream an incinerator,
d. incinerating said mixture, providing an incinerated gas comprising SO₂ and NOₓ,
e. removing inorganic dust in a filter unit,
f. combining said incinerated gas with a stream comprising a NOₓ selective reductant taken from the group comprising ammonia, urea and precursors thereof, providing a process gas for selective reduction,
g. reacting said process gas for selective reduction under selective NOₓ reduction conditions, providing a process gas having a reduced concentration of NOₓ,
h. contacting said process gas with a material catalytically active in oxidation of SO₂ to SO₃ providing an oxidized process gas, and
i. withdrawing concentrated sulfuric acid by either cooling and condensation or by absorption of SO₃ in H₂SO₄, providing oleum or concentrated sulfuric and a sulfur reduced process gas.

2. A process according to claim 1 further comprising the step of contacting said process gas for selective reduction with a material catalytically active in selective reduction of NOₓ, and in which said selective NOₓ reduction conditions involves a temperature between 350 and 550°C and a pressure of 0.8-1.2 bar.

3. A process according to claim 2 wherein the material catalytically active in selective reduction of NOₓ comprises a carrier, such as titanium oxide, and active catalytic components taken from the group consisting of oxides of base metals such as vanadium, molybdenum and tungsten, zeolites, and precious metals.

4. A process according to claim 1, 2 or 3 wherein the H₂O/SO₂ ratio in the oxidized process gas is below 1.1, and wherein the oxidized process gas is directed to a condenser for cooling and withdrawal of condensed concentrated sulfuric acid, said process optionally also including the step of addition of water in any position upstream said condenser.

5. A process according to claim 1, 2 or 3 wherein the process gas comprises less than 60 ppm water, and wherein the oxidized process gas is directed to an absorber for absorption of SO₃ in concentrated sulfuric acid and for withdrawal of concentrated sulfuric acid, said process optionally also including the step of removal of water in any position upstream said material catalytically active in oxidation of SO₂ to SO₃.

6. A process according to claim 1, 2, 3, 4 or 5 in which said material catalytically active in oxidation of H₂S to elemental sulfur is taken from the group comprising picric acid, thioarsenate or quinones, such as a benzoquinone, naphthoquinone or anthraquinone compound optionally with one or more further constituents in ionic form such as sodium, iron, vanadium or cobalt.

7. A process according to claim 1, 2, 3, 4, 5 or 6 further comprising the step of separating particulate matter from one or more of the streams upstream said material catalytically active in oxidation of SO₂ to SO₃.

8. A process according to claim 1, 2, 3, 4, 5, 6 or 7 further comprising the step of withdrawing a purge stream of said coke oven gas absorber liquid.

9. A process according to claim 1, 2, 3, 4, 5, 6, 7 or 8 in which at least a part of said purge stream is directed to said incinerator for conversion of sulfur containing anions to SO₂ and SO₃.

10. A process according to claim 1, 2, 3, 4, 5, 6, 7, 8 or 9 in which one or both of said first and second gas comprising oxygen is atmospheric air being preheated by heat exchange with a hot process stream such as the oxidized process gas.

11. A process according to claim 1, 2, 3, 4, 5, 6, 7, 8, 9 or 10 further comprising the step of cooling said incinerated gas to a temperature in the range of 300 to 450°C, preferably 380 to 420°C.

12. A process plant comprising an alkaline absorber configured for contacting a gas comprising H₂S with a liquid ammonia absorbent solution and a material catalytically active in oxidation of H₂S to elemental sulfur providing a liquid slurry comprising elemental sulfur and coke oven gas absorber liquid,
a means for mechanical separation configured for separating at least a portion of said elemental sulfur from coke oven gas absorber liquid by mechanical means of separation as a sulfur sludge,
an incinerator configured for incinerating said sulfur sludge together with an support fuel and a first gas comprising oxygen, providing a process gas, a means of cooling such as a waste heat boiler for reducing the process gas temperature,
a particulate removal device for separating solid particles from the process gas,
a means for addition of a selective NOₓ reductant,
a sulfur dioxide converter comprising a material active in oxidation of SO₂ to SO₃ and configured for receiving said process gas and providing an oxidized process gas, and
a means for provision of concentrated sulfuric acid configured for receiving said oxidized process gas and for providing a concentrated sulfuric acid and a desulfurized process gas.

13. A process plant according to claim 12 in which said means for withdrawal for sulfuric acid is a condenser configured for receiving said oxidized process gas and a cooling medium and configured for cooling and condensing a concentrated sulfuric acid, a desulfurized process gas and a heated cooling medium, and which process plant optionally comprises a means for addition of water upstream said condenser.

14. A process plant according to claim 13 in which said means for withdrawal for sulfuric acid is an absorber configured for receiving said oxidized process gas and a concentrated sulfuric acid and for absorbing SO₃ in said sulfuric acid providing a concentrated sulfuric acid and a desulfurized process gas.

15. A process plant according to claim 12, 13 or 14 further comprising a reactor downstream the addition of selective reductant said reactor configured for the process gas to contact a material catalytically active in selective reduction of NOₓ.

## Amended claims

### Amended claims in accordance with Rule 137(2) EPC.

1. A process for the production of sulfuric acid from a gas comprising H₂S, said method comprising the following steps:
a. directing said gas to an alkaline absorber containing a liquid ammonia absorbent solution and a dissolved material catalytically active in oxidation of H₂S to elemental sulfur providing a liquid slurry comprising elemental sulfur and coke oven gas absorber liquid,
b. separating at least a portion of said elemental sulfur from coke oven gas absorber liquid by mechanical means of separation as a sulfur sludge,
c. combining said sulfur sludge with an support fuel and a first oxidant gas in or upstream an incinerator,
d. incinerating said mixture, providing an incinerated gas comprising SO₂ and NOₓ
e. removing inorganic dust in a filter unit
f. combining said incinerated gas with a stream comprising a NOₓ selective reductant taken from the group comprising ammonia, urea and precursors thereof, providing a process gas for selective reduction
g. reacting said process gas for selective reduction under selective NOₓ reduction conditions, providing a process gas having a reduced concentration of NOₓ,
h. contacting said process gas with a material catalytically active in oxidation of SO₂ to SO₃ providing an oxidized process gas,
i. withdrawing concentrated sulfuric acid by either cooling and condensation or by absorption of SO₃ in H₂SO₄, providing oleum or concentrated sulfuric and a sulfur reduced process gas.

2. A process according to claim 1 further comprising the step of contacting said process gas for selective reduction with a material catalytically active in selective reduction of NOₓ, and in which said selective NOₓ reduction conditions involves a temperature between 350 and 550°C and a pressure of 0.8-1.2 bar.

3. A process according to claim 2 wherein the material catalytically active in selective reduction of NOₓ comprises a carrier, such as titanium oxide, and active catalytic components taken from the group consisting of oxides of base metals such as vanadium, molybdenum and tungsten, zeolites, and precious metals.

4. A process according to claim 1, 2 or 3 wherein the H₂O/SO₂ ratio in the oxidized process gas is below 1.1, and wherein the oxidized process gas is directed to a condenser for cooling and withdrawal of condensed concentrated sulfuric acid, said process optionally also including the step of addition of water in any position upstream said condenser.

5. A process according to claim 1, 2 or 3 wherein the process gas comprises less than 60 ppm water, and wherein the oxidized process gas is directed to an absorber for absorption of SO₃ in concentrated sulfuric acid and for withdrawal of concentrated sulfuric acid, said process optionally also including the step of removal of water in any position upstream said material catalytically active in oxidation of SO₂ to SO₃.

6. A process according to claim 1, 2, 3, 4 or 5 in which said material catalytically active in oxidation of H₂S to elemental sulfur is taken from the group comprising picric acid, thioarsenate or quinones, such as a benzoquinone, naphthoquinone or anthraquinone compound optionally with one or more further constituents in ionic form such as sodium, iron, vanadium or cobalt.

7. A process according to claim 1, 2, 3, 4, 5 or 6 further comprising the step of separating particulate matter from one or more of the streams upstream said material catalytically active in oxidation of SO₂ to SO₃.

8. A process according to claim 1, 2, 3, 4, 5, 6 or 7 further comprising the step of withdrawing a purge stream of said coke oven gas absorber liquid.

9. A process according to claim 1, 2, 3, 4, 5, 6, 7 or 8 in which at least a part of said purge stream is directed to said incinerator for conversion of sulfur containing anions to SO₂ and SO₃.

10. A process according to claim 1, 2, 3, 4, 5, 6, 7, 8 or 9 in which one or both of said first and second gas comprising oxygen is atmospheric air being preheated by heat exchange with a hot process stream such as the oxidized process gas.

11. A process according to claim 1, 2, 3, 4, 5, 6, 7, 8, 9 or 10 further comprising the step of cooling said incinerated gas to a temperature in the range of 300 to 450°C, preferably 380 to 420°C.

12. A process plant comprising an alkaline absorber configured for contacting a gas comprising H₂S with a liquid ammonia absorbent solution and a dissolved material catalytically active in oxidation of H₂S to elemental sulfur providing a liquid slurry comprising elemental sulfur and coke oven gas absorber liquid, a means for mechanical separation configured for receiving an amount of said liquid slurry and configured for separating at least a portion of said elemental sulfur from coke oven gas absorber liquid by mechanical means of separation as a sulfur sludge, an incinerator configured for receiving and incinerating said sulfur sludge together with an support fuel and a first gas comprising oxygen, providing a process gas, a means of cooling such as a waste heat boiler for reducing the process gas temperature,
a particulate removal device for receiving said process gas and separating solid particles from the process gas,
a means for addition of a selective NOₓ reductant into said process gas, providing a process gas having a reduced NOₓ content,
a sulfur dioxide converter configured for receiving said process gas having a reduced NOₓ content, and comprising a material active in oxidation of SO₂ to SO₃ and configured for receiving said process gas and providing an oxidized process gas, and
a means for provision of concentrated sulfuric acid configured for receiving said oxidized process gas and for providing a concentrated sulfuric acid and a desulfurized process gas.

13. A process plant according to claim 12 in which said means for withdrawal for sulfuric acid is a condenser configured for receiving said oxidized process gas and a cooling medium and configured for cooling and condensing a concentrated sulfuric acid, a desulfurized process gas and a heated cooling medium, and which process plant optionally comprises a means for addition of water upstream said condenser.

14. A process plant according to claim 13 in which said means for withdrawal for sulfuric acid is an absorber configured for receiving said oxidized process gas and a concentrated sulfuric acid and for absorbing SO₃ in said sulfuric acid providing a concentrated sulfuric acid and a desulfurized process gas.

15. A process plant according to claim 12, 13 or 14 further comprising a reactor downstream the addition of selective reductant said reactor configured for the process gas to contact a material catalytically active in selective reduction of NOₓ.
